# EUROPEAN PATENT SPECIFICATION

(11) **EP 4 513 229 B1**
(45) Date of publication and mention of the grant of the patent: **01.04.2026**
(21) Application number: 24156214.9
(22) Date of filing: 07.02.2024
(51) Int. Cl.: G01S 7/481, G01S 7/497

(54) **LIDAR SYSTEM FOR VEHICLES**
LIDAR-SYSTEM FÜR FAHRZEUGE
SYSTÈME LIDAR POUR VÉHICULES

(30) Priority: 23.08.2023 KR 20230110608
(43) Date of publication of application: 26.02.2025
(73) Proprietor: Hyundai Mobis Co., Ltd., Gangnam-gu Seoul 06141 (KR)
(72) Inventor: BYUN, Jae Sup, 16891 Yongin-si (KR); KIM, Jang Ho, 16891 Yongin-si (KR)
(74) Representative: Vossius & Partner Patentanwälte Rechtsanwälte mbB

(56) References cited:
- GB-A- 2 565 428
- KR-B1- 102 170 890
- US-A1- 2023 123 315

## Description

### BACKGROUND

### 1. Field of the Invention

The present invention relates to a LiDAR system for vehicles, and more specifically, to a LiDAR system for vehicles installed on a structure of a vehicle.

### 2. Discussion of Related Art

With the development of vehicle technology, functions such as autonomous parking as well as autonomous driving are being demanded. To perform the functions, a need for a LiDAR is increasing. In general, the LiDAR is mounted on structures such as a bumper or grill of a vehicle and detect objects or structures by sensing the front and rear of the vehicle. However, since the LiDAR is mounted in a state of being exposed to the outside of the vehicle, foreign substances such as dust may attach to a surface when the vehicle is moving. Consequently, problems such as the accuracy of the sensor's measurement values being reduced and the surrounding environment itself not being recognized occur.

US 2023/0123315 A1 discloses a motor vehicle roof module having a panel component whose outer surface at least partially forms the roof skin of the vehicle roof and serves as an outer sealing surface of the roof module, and at least one environmental sensor by means of which a vehicle environment can be detected during autonomous or semi-autonomous driving of the motor vehicle.

KR 102 170 890 B1 discloses a Lidar housing device.

### SUMMARY OF THE INVENTION

The present invention is directed to providing a LiDAR system as defined in claim 1. Preferred embodiments are defined in the dependent claims.

According to an embodiment, each of the guide brackets include a rail extending toward the opening in the first direction, and a locking groove to which the locking unit is locked is formed on a surface of the rail facing the LiDAR.

According to an embodiment, the locking unit includes a fixed frame fixed to a rear surface of the LiDAR and having a first accommodating groove open toward the rail, a stopper disposed to be movable in a second direction within the first accommodating groove, and a first spring configured to apply an elastic force to the stopper within the first accommodating groove so that the stopper maintains a state of protruding from the first accommodating groove toward the rail.

According to an embodiment, the locking unit maintains the unlocked state in a state in which a front end of the stopper is pushed into the first accommodating groove by contacting the surface of the rail, and the locking unit configured to be switched to the locked state by the stopper protruding from the first accommodating groove by elasticity of the compressed first spring and being locked in the locking groove when the front end of the stopper is inserted into the locking groove.

According to an embodiment, the stopper includes a first body having a downward inclined surface toward the rail and a second body extending horizontally from the first body, and the first spring is disposed around the second body.

According to an embodiment, the second body is provided in a structure that extends through a bottom of the fixed frame within the first accommodating groove, and a locking structure that is elastically deformable is formed at a tip end of the second body.

According to an embodiment, the unlocking unit includes a stopper guide disposed to be movable in the first direction within the locking groove, a fixed cover having a second accommodating groove for accommodating the stopper guide and fixed to an internal space of the guide bracket connected to the locking groove, and a second spring configured to apply an elastic force to the stopper guide within the second accommodating groove so that the stopper guide maintains a state of being moved forward in the locking groove toward the opening.

According to an embodiment, the stopper guide includes a third body divided into a front end having an inclined surface inclined downward toward the LiDAR in the locking groove and a rear end accommodated within the second accommodating groove of the fixed cover in the internal space and a fourth body vertically extending from the rear end of the third body, and the second spring is disposed around the fourth body.

According to an embodiment, the fixed cover includes a locking protrusion for preventing the stopper guide accommodated within the second accommodating groove from being separated.

According to an embodiment, the LiDAR includes rail holes coupled to the rail on both side surfaces.

### BRIEF DESCRIPTION OF THE DRAWINGS

FIG. 1 is a view schematically illustrating a LiDAR system for vehicles according to an embodiment of the present invention;
FIG. 2 is a view schematically illustrating components of the LiDAR system for vehicles according to the embodiment of the present invention;
FIG. 3 is a view schematically illustrating a first link unit and a gear unit connected to a door;
FIG. 4 is a view schematically illustrating a lower cover of a housing including guide grooves and a sliding groove;
FIGS. 5 and 6 are views schematically illustrating a state in which the door closes an opening and a state in which the door opens the opening, respectively, by operation of the first link unit;
FIG. 7 is a view schematically illustrating a LiDAR, a guide bracket, a locking unit, and an unlocking unit;
FIG. 8 is a view schematically illustrating the locking unit attached to the LiDAR;
FIG. 9 is a view schematically illustrating the locking unit and the unlocking unit in an unlocked state;
FIG. 10 is a view schematically illustrating the locking unit and the unlocking unit in a locked state;
FIG. 11 is an operational view illustrating a state in which the locking unit is converted to the unlocked state;
FIG. 12 is a view illustrating operation of a second lower gear in an operating section and an idling section of a first lower gear;
FIG. 13 is a view illustrating operation of the second lower gear and a second upper gear according to the rotation of the first lower gear and a first upper gear;
FIG. 14 is an operational view illustrating a state in which the door opens the opening; and
FIG. 15 is an operational view illustrating a state in which the LiDAR is deployed to the outside by passing through the opening.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION OF EXEMPLARY EMBODIMENTS

The following detailed description is provided to assist the reader in gaining a comprehensive understanding of the methods, apparatuses, and/or systems described herein. The examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments of the present invention will be described in detail with reference to the accompanying drawings, and components which are the same or correspond to each other will be denoted by the same or corresponding reference numerals in all drawings, and redundant descriptions will be omitted.

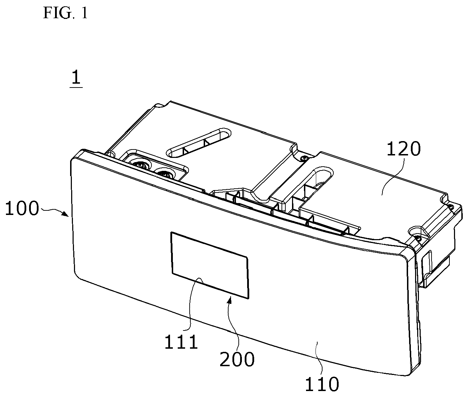

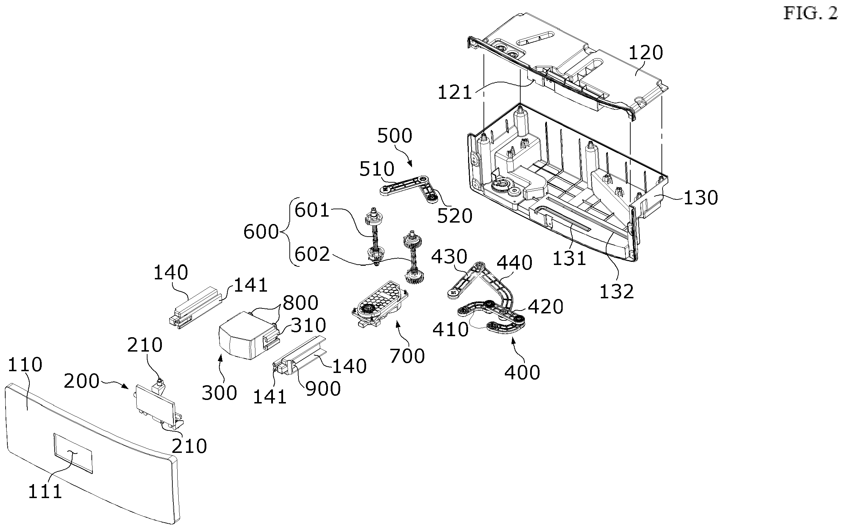

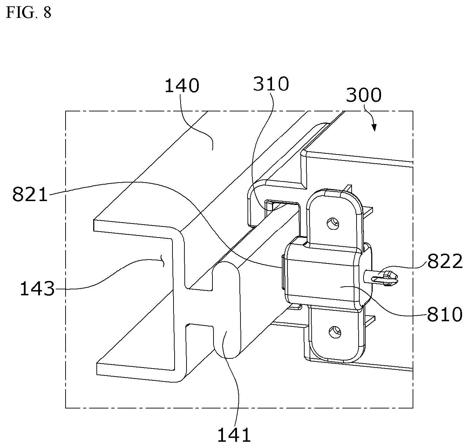

FIGS. 1 to 13 schematically illustrate a LiDAR system for vehicles and components constituting the LiDAR system for vehicles according to an embodiment of the present invention.

A LiDAR system 1 for vehicles according to an embodiment of the present invention may be installed on a structure of a vehicle that is not shown. For example, the LiDAR system 1 may be installed on the back of a vehicle's grill, bumper cover, or the like.

Referring to the drawings, the LiDAR system 1 for vehicles according to the embodiment of the present invention may include a housing 100, a door 200, a LiDAR 300, a first link unit 400, and a second link unit 500, and a gear unit 600.

The housing 100 may have an approximately box-shaped structure with an internal space. The door 200, the LiDAR 300, the first link unit 400, the second link unit 500, and the gear unit 600 may be accommodated in the internal space.

An opening 111 may be formed in a front cover 110, which is a front of the housing 100, and first guide grooves 121 and 131 may be formed in an upper cover 120 and a lower cover 130, respectively. In addition, a second guide groove 132 may be formed in the lower cover 130.

The housing 100 may be provided so that the opening 111 is exposed through the grill or bumper cover in a state of being installed on the grill or bumper cover.

The door 200 and the LiDAR 300 may be disposed inside the housing 100 and configured to move in conjunction with each other to be alternately disposed at the opening 111.

That is, when the vehicle is not in an autonomous driving mode, the LiDAR 300 is stored inside the housing 100, and the opening 111 is closed by disposing the door 200 at the opening 111, and thus the LiDAR 300 is prevented from being contaminated or damaged by external foreign substances. Then, when the vehicle is switched to the autonomous driving mode, the door 200 opens the opening 111, and the LiDAR 300 stored inside the housing 100 is disposed at the opening 111 to be deployed to the outside through the opening 111.

The door 200 is disposed in the housing 100 and configured to slide along the first guide grooves 121 and 131 to selectively open or close the opening 111.

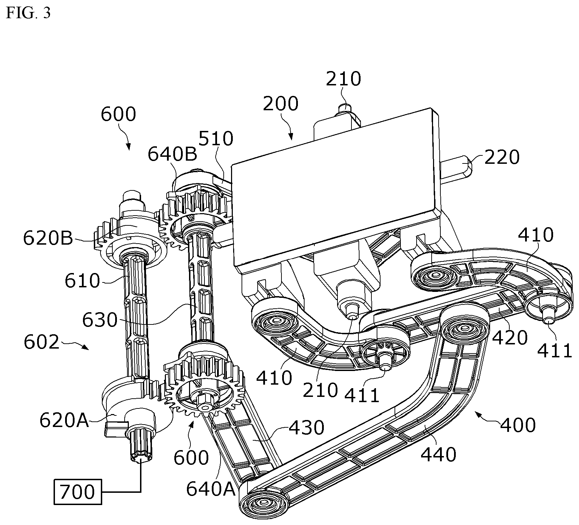

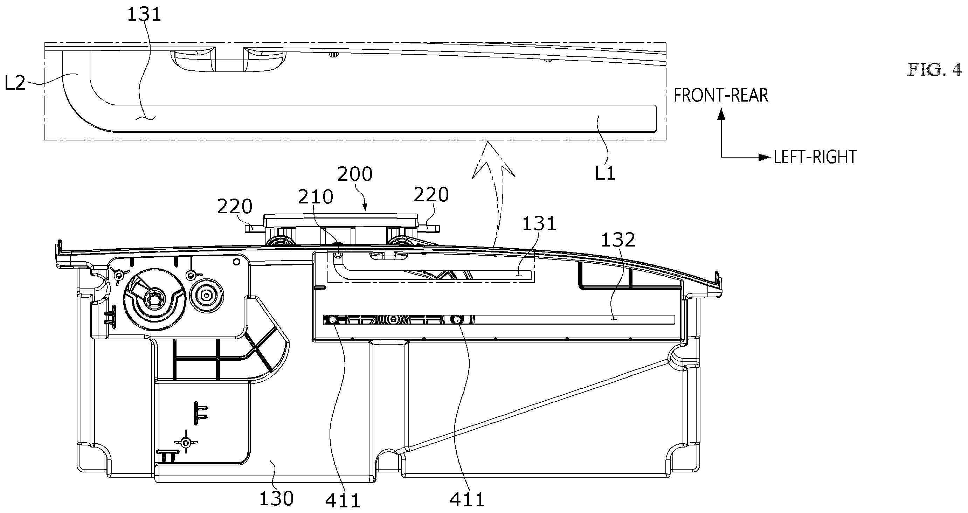

Referring to FIGS. 3 and 4, the door 200 may have guide pins 210 connected to the first guide grooves 121 and 131 on upper and lower surfaces, respectively.

The guide pins 210 may be provided in a structure that protrudes from the upper and lower surfaces of the door 200, respectively, and the door 200 may slide along a trajectory provided by the first guide grooves 121 and 131 through the guide pins 210.

The first guide grooves 121 and 131 may include a first movement section L1 straightly disposed in a left-right direction behind the opening 111 and a second movement section L2 curvedly extending in a front-rear direction from the first movement section L1 toward the opening 111.

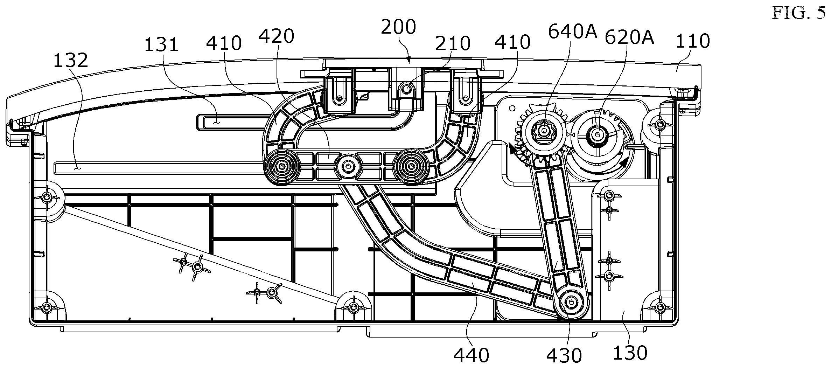

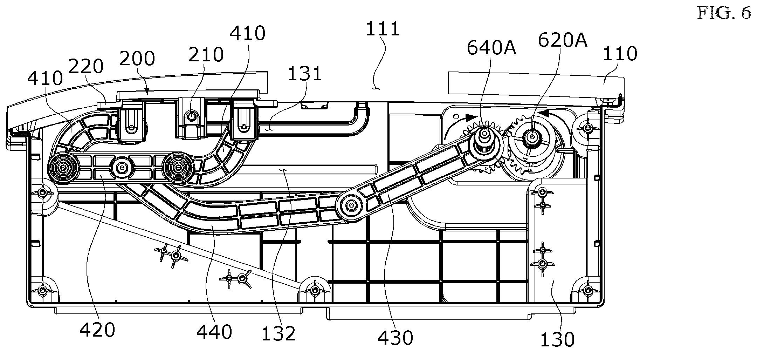

Accordingly, as illustrated in FIGS. 5 and 6, in a state in which the door 200 is disposed at the opening 111 to close the opening 111, the door 200 may open the opening 111 by moving rearward toward the inside of the housing 100 along the second movement section L2 and moving to the right (or left) along the first movement section L1, and may be hidden on the back of the front cover 110. In addition, the door 200 may close the opening 111 by moving to the left (or right) along the first movement section L1 and moving forward toward the outside of the housing 100 along the second movement section L2.

The door 200 may have a stopping protrusion 220 on each of both side surfaces.

The stopping protrusion 220 may serve to prevent the door 200 from further moving forward by being provided to contact the back of the front cover 110 in the state in which the door 200 is disposed at the opening 111 to close the opening 111.

The LiDAR 300 is configured to slide in the front-rear direction within the housing 100 and selectively deployed to the outside through the opening 111.

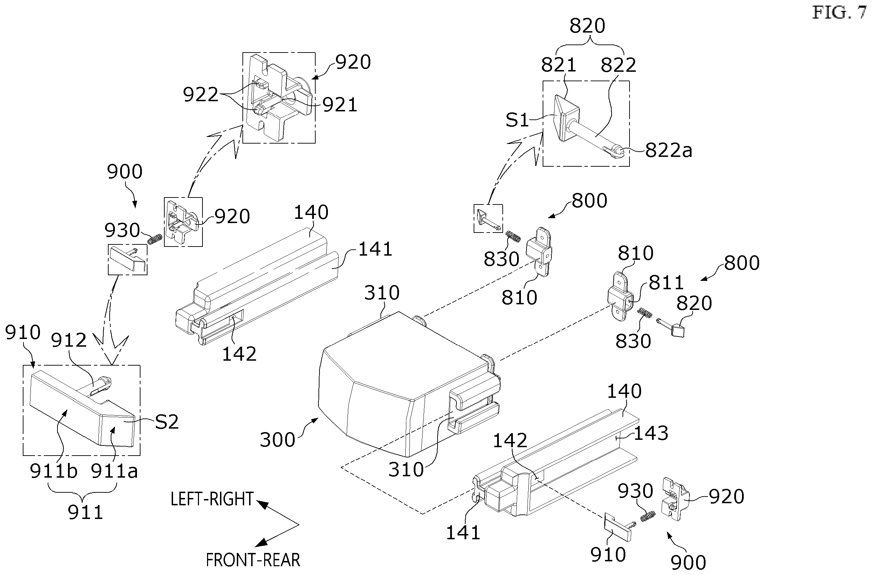

As illustrated in FIGS. 7 to 11, a guide bracket 140 may be provided within the housing 100 to allow the LiDAR 300 to slide forward and rearward. A pair of guide brackets 140 may be provided, disposed on both left and right side surfaces of the LiDAR 300, and configured to guide sliding movement of the LiDAR 300.

A locking unit 800 may be attached to the LiDAR 300, and the locking unit 800 may be configured to lock the sliding movement of the LiDAR 300 in conjunction with the guide brackets 140.

In addition, an unlocking unit 900 may be attached to the guide bracket 140, and the unlocking unit 900 may be configured to switch the locking unit 800 from a locked state to an unlocked state.

First, each of the guide brackets 140 may have a rail 141 extending in the front-rear direction toward the opening 111. In addition, the LiDAR 300 may have rail holes 310 coupled to the rails 141 on both side surfaces.

The rail holes 310 each have a structure that is open in the front-rear direction, so that the LiDAR 300 may reciprocate in the front-rear direction along the trajectory provided by the rails 141 in a state in which the rails 141 are coupled to the rail holes 310.

A locking groove 142 in which the locking unit 800 is locked may be formed on the surface of the rail 141 facing the LiDAR 300. The locking groove 142 may be positioned at the front of the rail 141 adjacent to the opening 111 and may be formed in a structure that passes through the rail 141 to be connected to the internal space 143 of the guide bracket 140.

The locking unit 800 is attached to the rear surface of the LiDAR 300 and locks the LiDAR 300 in a state in which the LiDAR 300 is deployed, so that the LiDAR 300 is prevented from being pushed into the housing 100 by an external force.

Referring to the drawings, the locking unit 800 may include a fixed frame 810, a stopper 820, and a first spring 830.

The fixed frame 810 may be fixed to the rear surface of the LiDAR 300 and may have a first accommodating groove 811 open toward the rail 141.

The stopper 820 may be disposed to be movable in the left-right direction within the first accommodating groove 811. That is, the stopper 820 may move forward or backward toward the rail 141 within the first accommodating groove 811.

In an example, the stopper 820 may include a first body 821 and a second body 822 extending from the first body 821.

The first body 821 may have an inclined surface S1 inclined downward toward the rail 141. In addition, the first body 821 may be disposed in the first accommodating groove 811 in a structure in which the inclined surface S1 faces the opening 111 in front of the rail 141.

The second body 822 may have a rod-shaped structure extending longitudinally along the first accommodating groove 811 and extend horizontally from the first body 821.

The second body 822 may be provided in a structure extending through a bottom of the fixed frame 810 within the first accommodating groove 811. In addition, a locking structure 822a capable of elastic deformation may be formed at a tip end of the second body 822 passing through the fixed frame 810.

The locking structure 822a provided in a structure divided by partially cutting the tip end of the second body 822 may prevent the stopper 820 from being separated from the first accommodating groove 811.

The first spring 830 may apply an elastic force on the stopper 820 within the first accommodating groove 811 so that the stopper 820 maintains a state of protruding from the first accommodating groove 811 toward the rail 141.

The first spring 830 may be a coil spring and may be disposed around the second body 822 within the first accommodating groove 811. In addition, as the stopper 820 moves, the first spring 830 may be compressed between the first body 821 and the bottom of the fixed frame 810.

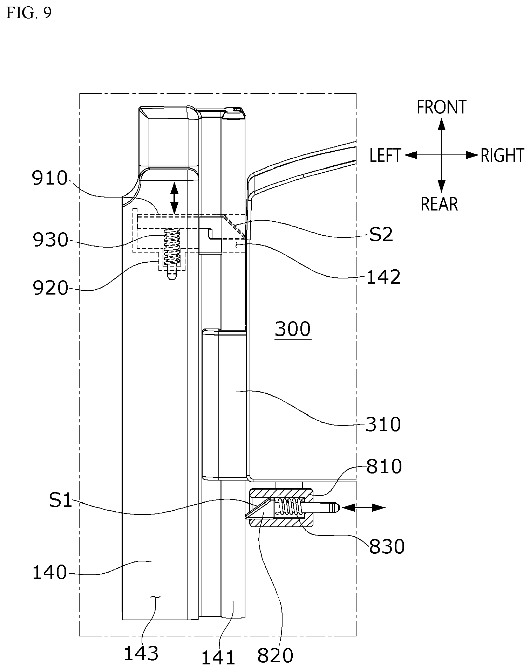

As illustrated in FIG. 9, the locking unit 800 maintains the unlocked state in a state in which a front end of the stopper 820 is pushed into the first accommodating groove 811 by contacting the surface of the rail 141. Therefore, in the unlocked state, the LiDAR 300 may slide in a front-rear direction along the rail 141.

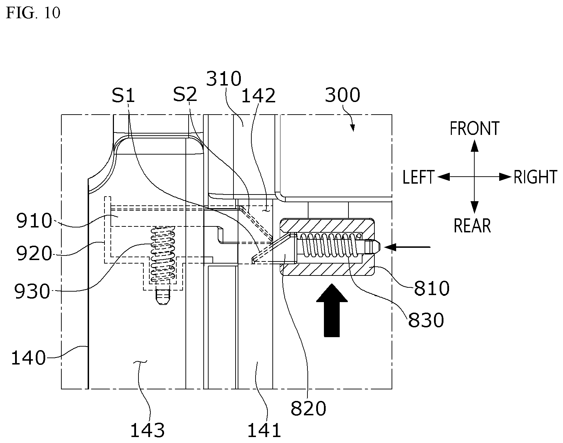

In addition, as illustrated in FIG. 10, when the LiDAR 300 moves and the front end of the stopper 820 is inserted into the locking groove 142, the stopper 820 protrudes from the first accommodating groove 811 by the elasticity of the compressed first spring 830 and is locked in the locking groove 142, and the locking unit 800 is switched to the locked state. Therefore, in the locked state, the LiDAR 300 does not move backward along the rail 141.

The unlocking unit 900 may include a stopper guide 910, a fixed cover 920, and a second spring 930, and may switch the locking unit 800 from the locked state to the unlocked state.

The stopper guide 910 may be disposed to be movable in the front-rear direction within the locking groove 142. The fixed cover 920 may have a second accommodating groove 921 for accommodating the stopper guide 910, and may be fixed to the internal space 143 of the guide bracket 140 connected to the locking groove 142. In addition, the second spring 930 may apply an elastic force to the stopper guide 910 within the second accommodating groove 921 to maintain a state in which the stopper guide 910 is moved forward in the locking groove 142 toward the opening 111.

Specifically, the stopper guide 910 may include a third body 911 divided into a front end 911a having an inclined surface S2 inclined downward from the locking groove 142 toward the LiDAR 300 and a rear end 911b accommodated in the second accommodating groove 921 of the fixed cover 920 in the internal space 143, and a fourth body 912 vertically extending from the rear end 911b of the third body 911.

That is, the third body 911 may be disposed in a structure that extends toward the LiDAR 300 across the locking groove 142 and the internal space 143, and the fourth body 912 may be disposed in a structure that extends parallel to a side surface of the LiDAR 300 from the third body 911. In this case, the third body 911 may be provided in the second accommodating groove 921 in a structure in which the inclined surface S2 faces the opening 111 in front of the rail 141, and the fourth body 912 may be provided in a structure that extends through the fixed cover 920 within the second accommodating groove 921.

The second spring 930 may be a coil spring and may be disposed around the fourth body 912 within the second accommodating groove 921. In addition, as the stopper guide 910 moves, the second spring 930 may be compressed between the third body 911 and the fixed cover 920.

The fixed cover 920 may have a stopping protrusion 922 for preventing the stopper guide 910 accommodated within the second accommodating groove 921 from being separated. Accordingly, the stopper guide 910 may move in the front-rear direction within the locking groove 142 by the second spring 930 in a state of being prevented from being separated to the outside by being accommodated within the second accommodating groove 921 of the fixed cover 920.

Referring to FIG. 9, the stopper guide 910 may be disposed based on a state of moving forward within the locking groove 142 by the second spring 930 as a basis. In addition, when an external force is applied through the stopper 820 of the locking unit 800, the stopper guide 910 may move backward within the locking groove 142 and then return to its original state by the elasticity of the second spring 930.

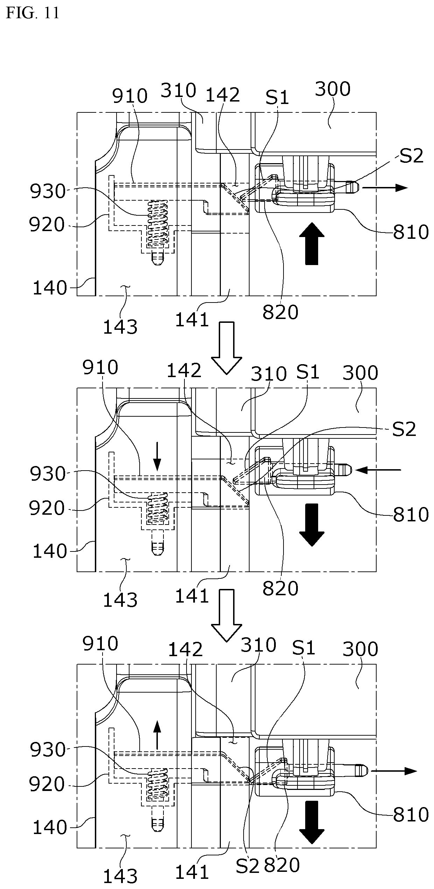

The operation of the unlocking unit 900 will be described in conjunction with the locking unit 800 with reference to FIGS. 10 and 11.

As illustrated in FIG. 10, when the locking unit 800 moves to the front of the rail 141 together with the LiDAR 300 and the stopper 820 of the locking unit 800 is inserted into the locking groove 142, the stopper 820 moves to the left by the elasticity of the first spring 830, protrudes from the first accommodating groove 811, and is locked in the locking groove 142. In the locked state of the locking unit 800, the stopper 820 is disposed within the locking groove 142 in a structure in which the inclined surface S1 contacts the front end of the stopper guide 910 at the rear of the stopper guide 910. In addition, rearward movement of the LiDAR 300 is restricted as the first body 821 of the stopper 820 is locked in the locking groove 142.

In order to move the LiDAR 300 backward and store the LiDAR 300 in the housing 100, a process of additionally moving the LiDAR 300 forward a predetermined distance and switching the locking unit 800 to the unlocked state through the unlocking unit 900 is required.

As illustrated in FIG. 11, when the LiDAR 300 additionally moves forward approximately 10 mm, the stopper 820 contacting the front end of the stopper guide 910 gradually moves to the right by being pushed by the stopper guide 910 along the inclined surface S1, and is stored inside the first accommodating groove 811, and after the stopper 820 passes over the stopper guide 910, the stopper 820 protrudes from the first accommodating groove 811 so that the front end of the stopper 820 is disposed in a structure that contacts the inclined surface S2 of the stopper guide 910.

Next, when the LiDAR 300 moves rearward toward the inside of the housing 100, the stopper 820 moves rearward while pushing the inclined surface S2 of the stopper guide 910, and thus the stopper guide 910 moves rearward within the locking groove 142.

After the stopper guide 910 finishes moving to the rear of the locking groove 142, the stopper 820 contacting the inclined surface S2 of the stopper guide 910 is pushed by the stopper guide 910 along the inclined surface S2, gradually moves to the right, and is stored inside the first accommodating groove 811, and after the stopper 820 passes over the stopper guide 910, the front end of the stopper 820 coming out of the locking groove 142 is disposed in a structure that contacts the surface of the rail 141 and the locking unit 800 is switched to the unlocked state. Then, as the stopper guide 910 is released from contact with the stopper 820, the stopper guide 910 is returned again to the front of the locking groove 142 by the elasticity of the second spring 930.

In this way, the stopper 820 of the locking unit 800 may be inserted into the locking groove 142 and locked in the state in which the LiDAR 300 is deployed forward, and thus the LiDAR 300 may be prevented from being pushed backward by an external force in the locked state of the locking unit 800. Then, the locking unit 800 may be switched to the unlocked state by allowing the stopper 820 to come out of the locking groove 142 in conjunction with the stopper guide 910 of the unlocking unit 900.

Sliding movement of the door 200 and the LiDAR 300 may be implemented through the first link unit 400, the second link unit 500, and the gear unit 600.

The first link unit 400 may be connected to the door 200 and configured to slide the door 200.

Referring to the drawings, the first link unit 400 may include a guide link 410, a connecting link 420, a first door driving link 430, and a second door driving link 440.

A pair of guide links 410 may be provided, and one ends thereof may be rotatably connected to one side and the other side of a bottom surface of the door 200 with respect to the guide pin 210, respectively, and the other ends may be provided with sliding pins 411 and connected to the second guide groove 132 provided in the lower cover 130 of the housing 100. Each of the sliding pins 411 may be provided in a structure that protrudes downward from a lower surface of the guide link 410 at the other end thereof.

One end and the other end of the connecting link 420 may be rotatably connected to the other ends of the pair of guide links 410, respectively. In this case, the connecting link 420 may be connected to the other surfaces of the guide links 410 opposite to the surfaces where the sliding pin 411 is provided at the other ends of the guide links 410. That is, the connecting link 420 may be connected to upper surfaces of the guide links 410 at the other ends thereof.

The first door driving link 430 may be connected to the gear unit 600 and rotate by power of an actuator 700 transmitted through the gear unit 600. In an example, the first door driving link 430 may have one end connected to a second lower gear 640A of the gear unit 600 and rotate together with the second lower gear 640A using the second lower gear 640A as a rotation axis.

The second door driving link 440 may have one end rotatably connected to the other end of the first door driving link 430, and the other end rotatably connected to the connecting link 420.

The second door driving link 440 implements sliding movement of the door 200 in the left-right direction by converting a rotational movement of the first door driving link 430 into a linear movement in the left-right direction based on the opening 111 in conjunction with the connecting link 420 and causing the guide link 410 to linearly reciprocate along the second guide groove 132 together with the connecting link 420. In this case, the door 200 slides while maintaining a state in which its front surface faces forward.

The second link unit 500 may be connected to the LiDAR 300 and configured to slide the LiDAR 300.

As illustrated in FIG. 3, the second link unit 500 may include a first LiDAR driving link 510 and a second LiDAR driving link 520.

The first LiDAR driving link 510 may be connected to the gear unit 600 and rotate by power of the actuator 700 transmitted through the gear unit 600. In an example, the first LiDAR driving link 510 may have one end connected to a second upper gear 640B of the gear unit 600 and rotate together with the second upper gear 640B using the second upper gear 640B as a rotation axis.

The second LiDAR driving link 520 may have one end rotatably connected to the other end of the first LiDAR driving link 510, and the other end rotatably connected to the LiDAR 300.

The second LiDAR driving link 520 implements sliding movement of the LiDAR 300 in the front-rear direction by converting a rotational movement of the first LiDAR driving link 510 into a linear movement in the front-rear direction based on the opening 111.

The gear unit 600 may be configured to transmit power of the actuator 700 to the first link unit 400 and the second link unit 500.

The gear unit 600 may include a first gear unit 601 and a second gear unit 602.

Referring to the drawings, the first gear unit 601 may rotate by being connected to the actuator 700, and the second gear unit 602 may transmit power of the actuator 700 to the first link unit 400 and the second link unit 500 by being connected to the first gear unit 601.

The first gear unit 601 may include a first shaft 610 connected to the actuator 700, a first lower gear 620A provided at a lower portion of the first shaft 610, and a first upper gear 620B provided at an upper portion of the first shaft 610. The first lower gear 620A and the first upper gear 620B are fitted and fixed to the first shaft 610 and configured to rotate integrally with the first shaft 610.

The second gear unit 602 may include a second shaft 630 disposed in parallel with the first shaft 610, a second lower gear 640A provided at a lower portion of the second shaft 630, and a second upper gear 640B provided at an upper portion of the second shaft 630. The second lower gear 640A and the second upper gear 640B are each rotatably connected to the second shaft 630 and configured to rotate individually.

The first lower gear 620A and the second lower gear 640A may be engaged with each other, and the first upper gear 620B and the second upper gear 640B may be engaged with each other.

The second lower gear 640A may be connected to the first link unit 400, and the second upper gear 640B may be connected to the second link unit 500. In detail, the second lower gear 640A may be connected to the first door driving link 430 of the first link unit 400, and the second upper gear 640B may be connected to the first LiDAR driving link 510 of the second link unit 500. In this case, the first door driving link 430 may be fitted into the second lower gear 640A to form binding, and the first LiDAR driving link 510 may be fitted into the second upper gear 640B to form binding.

The first shaft 610 rotates as one end thereof is connected to the actuator 700, and the first lower gear 620A and the first upper gear 620B integrally rotate together with the first shaft 610. In addition, the second lower gear 640A engages with the first lower gear 620A and rotates about the second shaft 630, and the second upper gear 640B engages with the first upper gear 620B and rotates about the second shaft 630.

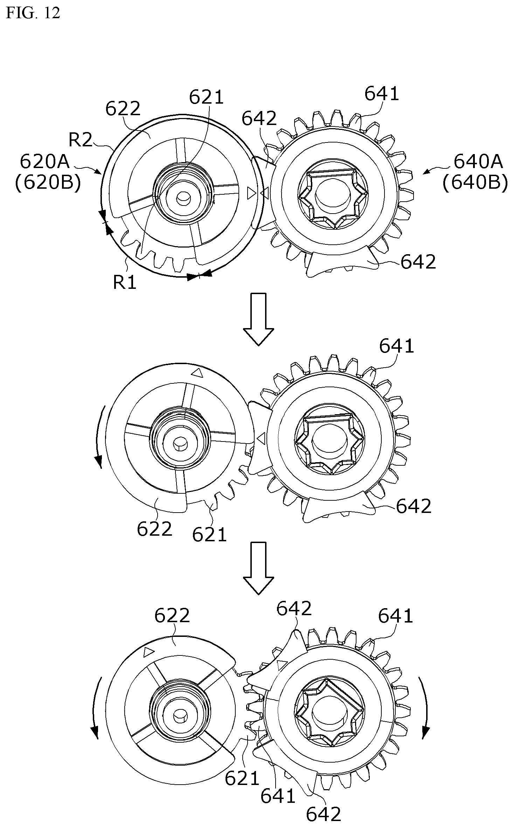

Referring to FIG. 12, outer circumferential surfaces of the first lower gear 620A and the first upper gear 620B may each be divided into an operating section R1 where first teeth 621 are formed and an idling section R2 where a rim 622 is formed. Specifically, the first teeth 621 may be formed in a section that is a part of the outer circumferential surface of each of the first lower gear 620A and the first upper gear 620B, and the rim 622 may be formed in a remaining part. In addition, a part of the section where the first teeth 621 are formed may correspond to the operating section R1, and the remaining section where the rim 622 is formed may correspond to the idling section R2.

The rim 622 may be formed in a structure that protrudes radially from an upper portion of the first teeth 621. That is, the rim 622 may be positioned at a higher level than the first teeth 621. In addition, the rim 622 may have an outer surface that protrudes and is curved in an arc shape.

Each of the second lower gear 640A and the second upper gear 640B may include second teeth 641 formed on an outer circumferential surface thereof and engaged with the first teeth 621 and a contactor 642 contacting the rim 622. Specifically, the second teeth 641 may be formed along the outer circumferential surface of each of the second lower gear 640A and the second upper gear 640B, and the contactor 642 may be formed in a structure that protrudes radially from an upper portion of the second teeth 641.

In an example, at least one contactor 642 may be provided in a section that is a part of the outer circumferential surface of each of the second lower gear 640A and the second upper gear 640B. The present example illustrates that two contactors 642 are provided spaced apart at a predetermined interval, but is not limited thereto. In addition, the contactor 642 may have an outer surface that is concave and curved in an arc shape corresponding to a shape of the outer surface of the rim 622.

As the first lower gear 620A and the first upper gear 620B rotate, in the operating section R1, the first teeth 621 engage with the second teeth 641 of the second lower gear 640A and the second upper gear 640B, so that the second lower gear 640A and the second upper gear 640B are rotated. That is, as the first teeth 621 engage with the second teeth 641 in the operating section R1, the second lower gear 640A and the second upper gear 640B rotate together with the first lower gear 620A and the first upper gear 620B.

In addition, the rim 622 of each of the first lower gear 620A and the first upper gear 620B contacts the contactor 642 and slides in the idling section R2, so that the second lower gear 640A and the second upper gear 640B do not rotate. That is, in the idling section R2, as the second teeth 641 do not engage with the first teeth 621 and the contactor 642 and the rim 622 slide against each other in a state of being in contact with each other, the second lower gear 640A and the second upper gear 640B do not rotate, and the first lower gear 620A and the first upper gear 620B idle.

Meanwhile, the operating section R1 in the first lower gear 620A and the operating section R1 in the first upper gear 620B may be disposed at different positions in a circumferential direction. Specifically, when viewed from above about the first shaft 610, the operating section R1 provided with the first teeth 621 of the first lower gear 620A and the operating section R1 provided with the first teeth 621 of the first upper gear 620B may be disposed not to overlap each other but to be offset. For example, the operating sections may be disposed so that the operating section R1 of the first upper gear 620B begins after the operating section R1 of the first lower gear 620A ends based on a clockwise direction.

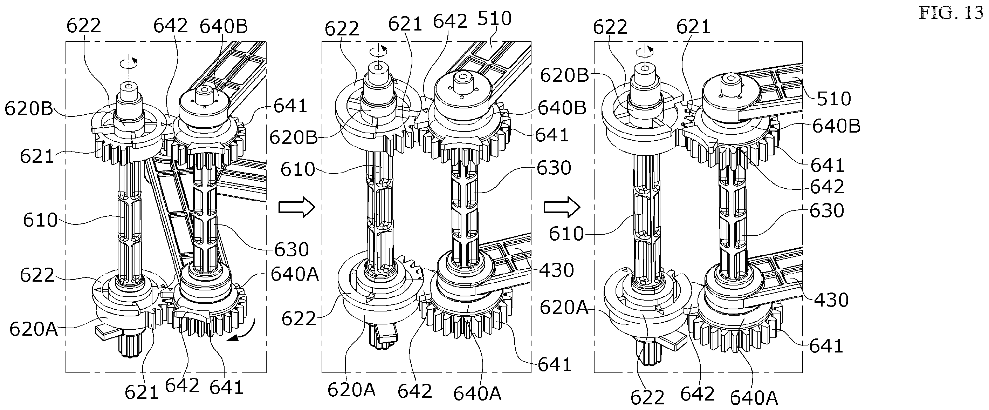

Accordingly, as illustrated in FIG. 13, when the first lower gear 620A and the first upper gear 620B rotate counterclockwise about the first shaft 610, the second lower gear 640A and the second upper gear 640B sequentially rotate by the operating section R1 of the first lower gear 620A and the operating section R1 of the first upper gear 620B.

That is, the second lower gear 640A that meets the operating section R1 of the first lower gear 620A rotates together with the first lower gear 620A, and the second upper gear 640B that meets the idling section R2 of the first upper gear 620B is stopped in a non-rotated state, and only the first upper gear 620B idles.

In addition, the second lower gear 640A that meets the idling section R2 of the first lower gear 620A is stopped in the non-rotated state, only the first lower gear 620A idles, and the second upper gear 640B that meets the operating section R1 of the first upper gear 620B rotates together with the first upper gear 620B.

Conversely, when the first lower gear 620A and the first upper gear 620B rotate clockwise, the second upper gear 640B rotates first, and when the second upper gear640B stops rotating, the second lower gear 640A rotates.

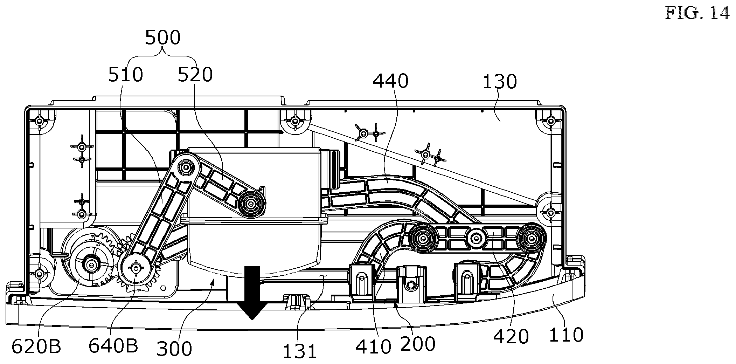

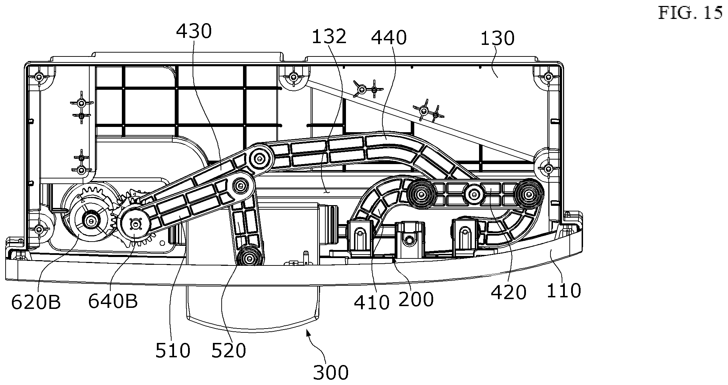

The operation of the LiDAR system for vehicles according to an embodiment of the present invention will be described with reference to FIGS. 14 and 15.

FIG. 14 is an operational view illustrating a state in which the door opens the door, and FIG. 15 is an operational view illustrating a state in which the LiDAR is deployed to the outside by passing through the opening.

As illustrated in FIG. 14, when the actuator 700 operates and the first gear unit 601 rotates, the second lower gear 640A engaged with the operating section R1 of the first lower gear 620A rotates and moves the first link unit 400, and the door 200 connected to the first link unit 400 slides, so that the opening 111 is opened.

The second upper gear 640B engaged with the idling section R2 of the first upper gear 620B is stopped without rotating as the first upper gear 620B idles, and the LiDAR 300 connected to the second link unit 500 maintains a state of being stored in the housing 100.

As illustrated in FIG. 15, in a state in which the door 200 opens the opening 111, the second lower gear 640A engaged with the idling section R2 of the first lower gear 620A is stopped without rotating as the first lower gear 620A idles, and when the second upper gear 640B engaged with the first upper gear 620B in the operating section R1 rotates and moves the second link unit 500, the LiDAR 300 connected to the second link unit 500 slides and is deployed to the outside through the opening 111. Then, when the autonomous driving mode ends, the actuator 700 operates, and when the first gear unit 601 rotates in the opposite direction, the second upper gear 640B rotates first and stores the LiDAR 300 inside the housing 100 in conjunction with the second link unit 500, and the second lower gear 640A rotates and slides the door 200 in conjunction with the first link unit 400, so that the opening 111 is closed.

As described above, according to an embodiment of the present invention, by configuring the LiDAR 300 to be selectively deployed outside a vehicle or stored inside the vehicle depending on a driving mode of the vehicle, it is possible to prevent the performance of the LiDAR 300 from deteriorating due to contamination by external foreign substances.

In addition, by blocking the opening 111 through which the LiDAR 300 is deployed to the outside with the door 200 in a state in which the LiDAR 300 is stored, it is possible to protect the LiDAR 300 from external environments and to prevent occurrence of a design difference on the exterior of the vehicle due to the opening 111 being opened. In addition, the locking unit 800 may be switched from the locked state to the unlocked state through the unlocking unit 900.

According to an embodiment of the present invention, it is possible to provide a LiDAR system for vehicles capable of preventing a LiDAR from being contaminated by deploying the LiDAR outside a vehicle only when operation of the LiDAR is required, such as in an autonomous driving mode.

## Claims

1. A LiDAR system (1) configured to be installed on a structure of a vehicle, the system comprising:
a housing (100) having an opening (111);
a LiDAR (300) configured to slide in a first direction within the housing (100) and to be selectively
deployed to an outside of the housing (100) through the opening (111);
guide brackets (140) disposed on first and second side surfaces of the LiDAR (300) and configured to guide sliding movement of the LiDAR (300);
a locking unit (800) configured to lock the LiDAR (300) so that the deployed LiDAR (300) is prevented from being pushed into the housing (100) by an external force in a locking state; and
an unlocking unit (900) configured to switch the locking unit (800) from the locked state to an unlocked state,
**characterized in that** the LiDAR system further includes:
a first link unit (400) coupled to a door (200) of the LiDAR (300) and configured to slide the door (200) through the opening (111);
a second link unit (500) coupled to the LiDAR (300) and configured to slide the LiDAR (300), and
a gear unit (600) coupled to an actuator (700), the first link unit (400) and the second link unit (500) and configured to transmit power of the actuator (700) to the first link unit (400) and the second link unit (500).

2. The LiDAR system of claim 1,
wherein each of the guide brackets (140) includes a rail (141) extending toward the opening (111) in the first direction, and
wherein a locking groove (142) to which the locking unit (800) is locked is formed on a surface of the rail (141) facing the LiDAR (300).

3. The LiDAR system of claim 2, wherein the locking unit (800) includes:
a fixed frame fixed to a rear surface of the LiDAR (300) and including a first accommodating groove (811) open toward the rail (141);
a stopper (820) disposed to be movable in a second direction within the first accommodating groove (811); and
a first spring (830) configured to apply an elastic force to the stopper (820) within the first accommodating groove (811) so that the stopper (820) maintains a state of protruding from the first accommodating groove (811) toward the rail (141).

4. The LiDAR system of claim 3,
wherein the locking unit (800) maintains the unlocked state in a state in which a front end (911a) of the stopper (820) is pushed into the first accommodating groove (811) by contacting the surface of the rail (141), and
wherein the locking unit (800) is configured to be switched to from the unlocked state to the locked state by the stopper protruding from the first accommodating groove (811) by elasticity of the compressed first spring (830) and being locked in the locking groove (142) when the front end (911a) of the stopper (820) is inserted into the locking groove (142).

5. The LiDAR system of claim 3, wherein the stopper (820) includes a first body (821) including a downward inclined surface toward the rail (141) and a second body (822) extending horizontally from the first body (821), and the first spring (830) is disposed around the second body (822).

6. The LiDAR system of claim 5, wherein the second body (822) is provided in a structure that extends through a bottom of the fixed frame within the first accommodating groove (811), and a locking structure (822a) that is elastically deformable is formed at a tip end of the second body (822).

7. The LiDAR system of claim 2, wherein the unlocking unit (900) includes:
a stopper guide (910) disposed to be movable in the first direction within the locking groove (142);
a fixed cover (920) including a second accommodating groove (921) for accommodating the stopper guide (910) and fixed to an internal space (143) of a guide bracket (140) connected to the locking groove (142) among the guide brackets (140); and
a second spring (930) configured to apply an elastic force to the stopper guide (910) within the second accommodating groove (921) so that the stopper guide (910) maintains a state of being moved forward in the locking groove (142) toward the opening (111).

8. The LiDAR system of claim 7, wherein the stopper guide (910) includes a third body (911) divided into a front end (911a) including an inclined surface inclined downward toward the LiDAR (300) in the locking groove (142) and a rear end (911b) accommodated within the second accommodating groove (921) of the fixed cover (920) in the internal space (143) and a fourth body (912) vertically extending from the rear end (911b) of the third body (911), and the second spring (930) is disposed around the fourth body (912).

9. The LiDAR system of claim 8, wherein the fixed cover (920) includes a locking protrusion for preventing the stopper guide (910) accommodated within the second accommodating groove (921) from being separated.

10. The LiDAR system of claim 2, wherein the LiDAR (300) includes rail (141) holes coupled to the rail (141) on the first and second side surfaces.

11. The LiDAR system of claim 1,
wherein the first link unit (400) includes a pair of guide links (410) pivotally connected to the door (200), a connecting link (420) pivotally connected to the pair of the guide links (410), a first door driving link connected to the gear unit (600), and a second door driving link pivotally coupled to the first door driving link and the connecting link (420).

12. The LiDAR system of claim 11,
wherein the housing (100) includes a cover (110, 120, 130),
wherein the LiDAR system further includes:
a guide groove (121, 131, 132) formed in the cover (110, 120, 130); and
a sliding pin (411), and
wherein the sliding pin (411) couples the connecting link (420) and the pair of guide links (410) to the guide groove (121, 131, 132) of the cover (110, 120, 130).

13. The LiDAR system of claim 11,
wherein the second link unit (500) includes a first LiDAR driving link connected to the gear unit (600) and rotate by power of the actuator (700) transmitted through the gear unit (600) and a second LiDAR driving link pivotally coupled to the first LiDAR driving link and the LiDAR (300).

14. The LiDAR system of claim 13,
wherein the gear unit (600) include a first gear unit (601), and a second gear unit (602) engaged to the first gear unit (601) and connected to the first door driving link and the first LiDAR driving link, and
wherein the first gear unit (601) is connected to the actuator (700), and the second gear unit (602) transmits the power of the actuator (700) to the first door driving link and the first LiDAR driving link.

## Patentansprüche

1. LiDAR-System (1), das konfiguriert ist, an einer Struktur eines Fahrzeugs installiert zu werden, wobei das System aufweist:
ein Gehäuse (100) mit einer Öffnung (111);
ein LiDAR (300), das konfiguriert ist, in einer ersten Richtung innerhalb des Gehäuses (100) zu gleiten und durch die Öffnung (111) selektiv zu einer Außenseite des Gehäuses (100) entfaltet zu werden;
Führungshalterungen (140), die an einer ersten und zweiten Seitenfläche des LiDAR (300) angeordnet und konfiguriert sind, die Gleitbewegung des LiDAR (300) zu führen;
eine Verriegelungseinheit (800), die konfiguriert ist, das LiDAR (300) zu verriegeln, so dass das entfaltete LiDAR (300) in einem Verriegelungszustand daran gehindert wird, durch eine äußere Kraft in das Gehäuse (100) gedrückt zu werden; und
eine Entriegelungseinheit (900), die konfiguriert ist, die Verriegelungseinheit (800) von dem verriegelten Zustand in einen entriegelten Zustand umzuschalten,
**dadurch gekennzeichnet, dass** das LiDAR-System ferner aufweist:
eine erste Verbindungseinheit (400), die mit einer Tür (200) des LiDAR (300) gekoppelt und konfiguriert ist, die Tür (200) durch die Öffnung (111) gleiten zu lassen;
eine zweite Verbindungseinheit (500), die mit dem LiDAR (300) gekoppelt und konfiguriert ist, das LiDAR (300) gleiten zu lassen, und
eine Getriebeeinheit (600), die mit einem Aktuator (700), der ersten Verbindungseinheit (400) und der zweiten Verbindungseinheit (500) gekoppelt und konfiguriert ist, die Kraft des Aktuators (700) auf die erste Verbindungseinheit (400) und die zweite Verbindungseinheit (500) zu übertragen.

2. LiDAR-System nach Anspruch 1,
wobei jede der Führungshalterungen (140) eine Schiene (141) aufweist, die sich zur Öffnung (111) in der ersten Richtung erstreckt, und
wobei eine Verriegelungsnut (142), an der die Verriegelungseinheit (800) verriegelt wird, auf einer Oberfläche der Schiene (141) ausgebildet ist, die dem LiDAR (300) zugewandt ist.

3. LiDAR-System nach Anspruch 2, wobei die Verriegelungseinheit (800) aufweist:
einen festen Rahmen, der an einer hinteren Fläche des LiDAR (300) befestigt ist und eine erste Aufnahmenut (811) aufweist, die zur Schiene (141) offen ist;
einen Stopper (820), der so angeordnet ist, dass er in einer zweiten Richtung innerhalb der ersten Aufnahmenut (811) beweglich ist; und
eine erste Feder (830), die konfiguriert ist, eine elastische Kraft auf den Stopper (820) in der ersten Aufnahmenut (811) auszuüben, so dass der Stopper (820) einen Zustand beibehält, in dem er aus der ersten Aufnahmenut (811) zur Schiene (141) vorsteht.

4. LiDAR-System nach Anspruch 3,
wobei die Verriegelungseinheit (800) den entriegelten Zustand in einem Zustand beibehält, in dem ein vorderes Ende (911a) des Stoppers (820) durch Berühren der Oberfläche der Schiene (141) in die erste Aufnahmenut (811) gedrückt wird, und
wobei die Verriegelungseinheit (800) konfiguriert ist, von dem entriegelten Zustand in den verriegelten Zustand umgeschaltet zu werden, indem der Stopper aus der ersten Aufnahmenut (811) durch die Elastizität der zusammengedrückten ersten Feder (830) vorsteht und in der Verriegelungsnut (142) verriegelt wird, wenn das vordere Ende (911a) des Stoppers (820) in die Verriegelungsnut (142) eingeführt wird.

5. LiDAR-System nach Anspruch 3, wobei der Stopper (820) einen ersten Körper (821), der eine nach unten zur Schiene (141) geneigte Fläche aufweist, und einen zweiten Körper (822) aufweist, der sich horizontal vom ersten Körper (821) erstreckt, und die erste Feder (830) um den zweiten Körper (822) angeordnet ist.

6. LiDAR-System nach Anspruch 5, wobei der zweite Körper (822) in einer Struktur vorgesehen ist, die sich durch einen Boden des festen Rahmens innerhalb der ersten Aufnahmenut (811) erstreckt, und eine Verriegelungsstruktur (822a), die elastisch verformbar ist, an einem Spitzenende des zweiten Körpers (822) ausgebildet ist.

7. LiDAR-System nach Anspruch 2, wobei die Entriegelungseinheit (900) aufweist:
eine Stopperführung (910), die so angeordnet ist, dass sie in der ersten Richtung innerhalb der Verriegelungsnut (142) beweglich ist;
eine feste Abdeckung (920), die eine zweite Aufnahmenut (921) zur Aufnahme der Stopperführung (910) aufweist und an einem Innenraum (143) einer mit der Verriegelungsnut (142) verbundenen Führungshalterung (140) unter den Führungshalterungen (140) befestigt ist; und
eine zweite Feder (930), die konfiguriert ist, eine elastische Kraft auf die Stopperführung (910) innerhalb der zweiten Aufnahmenut (921) auszuüben, so dass die Stopperführung (910) einen Zustand beibehält, in dem sie in der Verriegelungsnut (142) zur Öffnung (111) vorwärts bewegt wird.

8. LiDAR-System nach Anspruch 7, wobei die Stopperführung (910) einen dritten Körper (911), der in ein vorderes Ende (911a), das eine geneigte Fläche aufweist, die nach unten zum LiDAR (300) in der Verriegelungsnut (142) geneigt ist, und ein hinteres Ende (911b) unterteilt ist, das in der zweiten Aufnahmenut (921) der festen Abdeckung (920) im Innenraum (143) aufgenommen ist ist, und einen vierten Körper (912) aufweist, der sich vertikal vom hinteren Ende (911b) des dritten Körpers (911) erstreckt, und die zweite Feder (930) um den vierten Körper (912) angeordnet ist.

9. LiDAR-System nach Anspruch 8, wobei die feste Abdeckung (920) einen Verriegelungsvorsprung aufweist, um zu verhindern, dass die in der zweiten Aufnahmenut (921) aufgenommene Stopperführung (910) getrennt wird.

10. LiDAR-System nach Anspruch 2, wobei das LiDAR (300) Schienen- (141) Löcher aufweist, die mit der Schiene (141) auf der ersten und zweiten Seitenfläche gekoppelt sind.

11. LiDAR-System nach Anspruch 1,
wobei die erste Verbindungseinheit (400) ein Paar von Führungsgliedern (410), die drehbar mit der Tür (200) verbunden sind, ein Verbindungsglied (420), das drehbar mit dem Paar der Führungsglieder (410) verbunden ist, ein erstes Türantriebsglied, das mit der Getriebeeinheit (600) verbunden ist, und ein zweites Türantriebsglied aufweist, das drehbar mit dem ersten Türantriebsglied und dem Verbindungsglied (420) gekoppelt ist.

12. LiDAR-System nach Anspruch 11,
wobei das Gehäuse (100) eine Abdeckung (110, 120, 130) aufweist,
wobei das LiDAR-System ferner aufweist:
eine Führungsnut (121, 131, 132), die in der Abdeckung (110, 120, 130) ausgebildet ist; und
einen Gleitstift (411), und
wobei der Gleitstift (411) das Verbindungsglied (420) und das Paar der Führungsglieder (410) mit der Führungsnut (121, 131, 132) der Abdeckung (110, 120, 130) koppelt.

13. LiDAR-System nach Anspruch 11,
wobei die zweite Verbindungseinheit (500) ein erstes LiDAR-Antriebsglied, das mit der Getriebeeinheit (600) verbunden ist und durch die Kraft des Aktuators (700) gedreht wird, die über die Getriebeeinheit (600) übertragen wird, und ein zweites LiDAR-Antriebsglied aufweist, das drehbar mit der ersten LiDAR-Antriebsverbindung und dem LiDAR (300) gekoppelt ist.

14. LiDAR-System nach Anspruch 13,
wobei die Getriebeeinheit (600) eine erste Getriebeeinheit (601) und eine zweite Getriebeeinheit (602) aufweist, die mit der ersten Getriebeeinheit (601) in Eingriff steht und mit dem ersten Türantriebsglied und dem ersten LiDAR-Antriebsglied verbunden ist, und
wobei die erste Getriebeeinheit (601) mit dem Aktuator (700) verbunden ist und die zweite Getriebeeinheit (602) die Kraft des Aktuators (700) auf das erste Türantriebsglied und das erste LiDAR-Antriebsglied überträgt.

## Revendications

1. Système de LIDAR (1), prévu pour être installé sur la structure d'un véhicule, ledit système comprenant :
un boîtier (100) présentant une ouverture (111) ;
un LIDAR (300) prévu pour coulisser dans une première direction à l'intérieur du boîtier (100) et pour être déployé sélectivement par l'ouverture (111) à l'extérieur du boîtier (100) ;
des supports de guidage (140) disposés sur la première et la deuxième surfaces latérales du LIDAR (300) et prévus pour guider le mouvement de coulissement du LIDAR (300) ;
une unité de verrouillage (800) prévue pour bloquer le LIDAR (300) de sorte que le LIDAR déployé (300) ne peut pas être repoussé dans le boîtier (100) par une force extérieure en état de verrouillage ; et
une unité de déverrouillage (900) prévue pour commuter l'unité de verrouillage (800) de l'état de verrouillage à l'état de déverrouillage,
**caractérisé en ce que** ledit système de LIDAR comprend en outre :
une première unité de liaison (400) raccordée à une porte (200) du LIDAR (300) et prévue pour faire coulisser la porte (200) par l'ouverture (111) ;
une deuxième unité de liaison (500) raccordée au LIDAR (300) et prévue pour faire coulisser le LIDAR (300), et
un réducteur (600) raccordé à un actionneur (700), à la première unité de liaison (400) et à la deuxième unité de liaison (500), et prévu pour transmettre la puissance de l'actionneur (700) à la première unité de liaison (400) et à la deuxième unité de liaison (500).

2. Système de LIDAR selon la revendication 1,
où chaque support de guidage (140) présente un rail (141) s'étendant vers l'ouverture (111) dans la première direction, et
où une rainure de verrouillage (142) où l'unité de verrouillage (800) est fixée est formée sur une surface du rail (141) opposée au LIDAR (300).

3. Système de LIDAR selon la revendication 2, où l'unité de verrouillage (800) comprend :
un cadre fixe fixé à une surface arrière du LIDAR (300), et présentant une première rainure de réception (811) ouverte sur le rail (141) ;
une butée (820) prévue pour être déplaçable dans une deuxième direction à l'intérieur de la première rainure de réception (811) ; et
un premier ressort (830) prévu pour appliquer une force élastique à la butée (820) à l'intérieur de la première rainure de réception (811), de sorte que la butée (820) maintient un état de saillie entre la première rainure de réception (811) et le rail (141).

4. Système de LIDAR selon la revendication 3,
où l'unité de verrouillage (800) maintient l'état de déverrouillage dans un état où une extrémité avant (911a) de la butée (820) est serrée dans la première rainure de réception (811) en contact avec la surface du rail (141), et
où l'unité de verrouillage (800) est prévue pour passer de l'état de déverrouillage à l'état de verrouillage par la saillie de la butée hors de la première rainure de réception (811) sous l'effet de l'élasticité du premier ressort comprimé (830) et par blocage dans la rainure de verrouillage (142) lorsque l'extrémité avant (911a) de la butée (820) est insérée dans la rainure de verrouillage (142).

5. Système de LIDAR selon la revendication 3, où la butée (820) présente un premier corps (821) présentant une surface inclinée vers le bas en direction du rail (141) et un deuxième corps (822) s'étendant horizontalement à partir du premier corps (821), et où le premier ressort (830) est disposé autour du deuxième corps (822).

6. Système de LIDAR selon la revendication 5, où le deuxième corps (822) est prévu dans une structure s'étendant par le fond du cadre fixe à l'intérieur de la première rainure de réception (811), et où une structure de verrouillage (822a) élastiquement déformable est formée à une extrémité en pointe du deuxième corps (822).

7. Système de LIDAR selon la revendication 2, où l'unité de déverrouillage (900) présente :
un guidage de butée (910) disposé de manière à être mobile dans la première direction à l'intérieur de la rainure de verrouillage (142) ;
un couvercle fixe (920) présentant une deuxième rainure de réception (921) pour loger le guidage de butée (910), et fixé à un espace intérieur (143) d'un support de guidage (140) raccordé à la rainure de verrouillage (142) parmi les supports de guidage (140) ; et
un deuxième ressort (930) prévu pour appliquer une force élastique au guidage de butée (910) dans la deuxième rainure de réception (921), de sorte que le guidage de butée (910) maintient un état de déplacement vers l'avant dans la rainure de verrouillage (142) en direction de l'ouverture (111).

8. Système de LIDAR selon la revendication 7, où le guidage de butée (910) présente un troisième corps (911) divisé en une extrémité avant (911a) présentant une surface inclinée vers le bas en direction du LIDAR (300) dans la rainure de verrouillage (142), et une extrémité arrière (911b) logée dans la deuxième rainure de réception (921) du couvercle fixe (920) dans l'espace intérieur (143), et un quatrième corps (912) s'étendant verticalement à partir de l'extrémité arrière (911b) du troisième corps (911), et où le deuxième ressort (930) est disposé autour du quatrième corps (912).

9. Système de LIDAR selon la revendication 8, où le couvercle fixe (920) présente une saillie de verrouillage pour empêcher la séparation du guidage de butée (910) logé dans la deuxième rainure de réception (921).

10. Système de LIDAR selon la revendication 2, où le LIDAR (300) présente des orifices de rail (141) reliés au rail (141) sur la première et la deuxième surface latérale.

11. Système de LIDAR selon la revendication 1,
où la première unité de liaison (400) présente une paire de liaisons de guidage (410) raccordées de manière pivotante à la porte (200), une liaison de connexion (420) raccordée de manière pivotante à la paire de liaisons de guidage (410), une première liaison d'entraînement de porte raccordée au réducteur (600), et une deuxième liaison d'entraînement de porte raccordée de manière pivotante à la première liaison d'entraînement de porte et à la liaison de connexion (420).

12. Système de LIDAR selon la revendication 11,
où le boîtier (100) présente un couvercle (110, 120, 130),
où ledit système de LIDAR présente en outre :
une rainure de guidage (121, 131, 132) formée dans le couvercle (110, 120, 130) ; et
un axe coulissant (411), et
où l'axe coulissant (411) raccorde la liaison de connexion (420) et la paire de liaisons de guidage (410) à la rainure de guidage (121, 131, 132) du couvercle (110, 120, 130).

13. Système de LIDAR selon la revendication 11,
où la deuxième unité de liaison (500) présente une première liaison d'entraînement de LIDAR raccordée au réducteur (600) et mise en rotation par la puissance de l'actionneur (700) transmise par le réducteur (600), et une deuxième liaison d'entraînement de LIDAR raccordée de manière pivotante à la première liaison d'entraînement de LIDAR et au LIDAR (300).

14. Système de LIDAR selon la revendication 13,
où le réducteur (600) comprend un premier réducteur (601) et un deuxième réducteur (602) engagé dans le premier réducteur (601) et raccordé à la première liaison d'entraînement de porte et à la première liaison d'entraînement de LIDAR, et
où le premier réducteur (601) est raccordé à l'actionneur (700), et le deuxième réducteur (602) transmet la puissance de l'actionneur (700) à la première liaison d'entraînement de porte et à la première liaison d'entraînement de LIDAR.
